Europäisches Patentamt

European Patent Office

Office européen des brevets

(19)

(11) Veröffentlichungsnummer: **0 244 498 B1**

# EUROPÄISCHE PATENTSCHRIFT

(45) Veröffentlichungstag der Patentschrift: **12.06.91**

(51) Int. Cl.⁵: **G07C 9/00**

(21) Anmeldenummer: **86106231.3**

(22) Anmeldetag: **06.05.86**

(54) **Anordnung und Verfahren zur Ermittelung der Berechtigung von Personen durch Überprüfen ihrer Fingerabdrücke.**

(43) Veröffentlichungstag der Anmeldung:
**11.11.87 Patentblatt 87/46**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**EP-A- 0 043 988    EP-A- 0 090 377
EP-A- 0 142 449    EP-A- 0 159 037
US-A- 4 151 512    US-A- 4 210 899
US-A- 4 322 163    US-A- 4 581 760**

**IBM TECHNICAL DISCLOSURE BULLETIN,
Band 18, Nr. 3, August 1975, Seiten 888,889,
New York, US; W.J. DEERHAKE et al.:
"Fingerprint verification method"**

(73) Patentinhaber: **Siemens Aktiengesellschaft
Wittelsbacherplatz 2
W-8000 München 2(DE)BE CH DE FR IT LI LU
NL SE AT**

Patentinhaber: **Siemens Ltd.
Siemens House Windmill Road
Sunbury-on-Thames Middlesex TW16
7HS(GB)GB**

(72) Erfinder: **Lilley, Robert
Knytersley House Knytersley
Stoke-on-Trent ST8 7AN(GB)**
Erfinder: **Ridgway, Paul John
21, Bowden Close, West Heath
Congleton, Cheshire CW12 4PQ(GB)**

## Beschreibung

Die Erfindung betrifft eine Anordnung und ein Verfahren gemäß dem Oberbegriff des Patentanspruchs 1 bzw. Patentanspruchs 11.

Die Verwendung von Plastikkarten als Ausweise für Zugangskontrollen oder als "Ersatzgeld" in Form von Scheckkarten, Bankkarten, Kreditkarten usw. ist weit verbreitet und wegen der Automatisierung des Zahlungsverkehres im Ansteigen begriffen. Zur Speicherung von Daten enthalten diese Karten im allgemeinen Magnetstreifen. Ein wesentliches Problem von derartigen Karten bildet der Mißbrauch derartiger Karten und die in dem Zusammenhang entstehenden hohen wirtschaftlichen Verluste. Um einen derartigen Mißbrauch zu verhindern ist es notwendig zum Zeitpunkt der Anwendung der Karten die Identität des Karteninhabers (berechtigte Person) die auf der Karte verzeichnet ist mit dem Kartenbenutzer zu überprüfen.

Zur Identitätsprüfung ist es bekannt, Fingerabdruckerkennungssysteme zu verwenden wie sie z.B. in der US-PS 44 28 670 oder der DE-PS 27 40 483 beschrieben sind. Dabei wird beim Erkennungsprozeß z.B. zur Identitätsprüfung der Fingerabdruck nach bestimmten Merkmalen oder Einzelheiten der Hautstruktur (Inseln Überkreuzungen der Hautfurchen, Wirbeln etc.) untersucht und die charakteristische Reihenfolge der Merkmale mit einer gespeicherten Menge und Folge verglichen und in Abhängigkeit davon die Identität der Person ermittelt. Dazu werden meistens Terminals mit Fingerabdruck-Sensoren verwendet, die wegen der großen anfallenden Datenmenge an einen Zentralrechner angeschlossen sind.

Die Verwendung von Zentralrechnern angeschlossenen Terminals behindern einen vielseitigen Einsatz eines derartigen Erkennungssystemes. Außerdem ist ein derartiges mit Zentralrechner arbeitendes System störungsanfällig, teuer und unhandlich.

Ein weiteres Problem bildet die Datensicherheit. So muß bei der Verwendung von Plastikkarten sichergestellt sein, daß die gespeicherten Daten nicht Unbefugten zugänglich gemacht werden.

Aus der EP-A-0 142 449 ist eine Anordnung zur Ermittlung der Berechtigung von Personen durch Überprüfung ihrer Fingerabdrücke bekannt. Dazu sind auf einem tragbaren Datenträger (Kreditkarte) kodierte Informationen gespeichert, die eine begrenzte Zahl von den Fingerabdruck der berechtigten Person repräsentierenden Merkmalen darstellen. Durch einen Sensor wird der aktuelle Fingerabdruck einer zu überprüfenden Person erfaßt und mittels einer Verifizierungsanordnung, welcher die auf dem Datenträger gespeicherten Informationen zusammen mit den aus dem aktuellen Fingerabdruck abgeleiteten Informationen zum Vergleich zugeführt werden, wird anhand des ermittelten Korrelationsgrades festgestellt, ob die zu überprüfende Person berechtigt ist. Hierzu werden maximal 27 Einzelmerkmale eines Fingerabdruckes für den Vergleich herangezogen.

Es ist weiterhin aus der Druckschrift IBM Technical Disclosure Bulletin, Aug. 1975, Seite 888 bis 889 ein Verfahren zur Überprüfung von Fingerabdrücken bekannt, bei der bestimmte Merkmale eines Fingerabdrucks in kodierter Form in einer Magnetstreifenkarte gespeichert sind, welche mit dem aktuellen Fingerabdruck des Kartenhalters verglichen werden. Dadurch, daß nur wenige ausgewählte kleine Bereiche eines Fingerabdruckes für den Vergleichsvorgang ausgewertet werden, ist eine starke Verringerung der im Magnetstreifen zu speichernden Daten möglich. Der erforderliche Korrelationsgrad für ein positives Vergleichsergebnis ist vorgebbar, so daß die Wahrscheinlichkeit falscher Berechtigungen den Sicherheitsanforderungen des jeweiligen Anwendungsfalls angepaßt werden kann.

Mit Fingerabdruck-Erkennungssytemen war es bisher üblich, die Identität der Person zu erfassen, d.h. aus dem Fingerabdruck selbst die Identität der Person abzuleiten. Diese Identitätsprüfung widerspricht dem Wunsch nach Datenschutz bei der Anwendung des Fingerabdruck-Erkennungssystems bei Scheckkarten, Kreditkarten etc.

Aufgabe der Erfindung ist es deshalb, eine täuschungssichere Anordnung und ein Verfahren zur Ermittlung der Berechtigung von Personen durch Überprüfung ihrer Fingerabdrücke unabhängig von einer zentralen EDV-Anlage bereitzustellen. Die Anordnung und das Verfahren sollen aus Datenschutzgründen so ausgebildet sein, daß eine eindeutige Identitätserfassung allein aufgrund des Fingerabdruckes nicht möglich ist. Diese Aufgabe wird bei einer Anordnung und einem Verfahren der eingangs genannten Art gemäß dem kennzeichnenden Teil der ersten und elften Patentansprüche gelöst.

Vorteilhafte Ausführungsformen der Erfindung sind in den Unteransprüche gekennzeichnet.

Die Erfindung ermöglicht es unabhängig arbeitende handliche Terminals zu verwenden. Diese können dazu dienen, die Zugangskontrolle zu Sicherheitsbereichen zu kontrollieren. Weiters ist es möglich z.B. jedem der bei Banken üblichen Geldautomaten eine derartige Einrichtung zuzuordnen. Auch kann mit derartigen Terminals jede Art von finanzieller Transaktionen abgesichert werden. Damit läßt sich ein Mißbrauch z.B. von Kreditkarten nahezu unterbinden.

Mit der Erfindung wird der Datenschutz optimal gewährleistet. So ist es zwar möglich mit hoher Sicherheit die Berechtigung einer Person täuschungssicher zu überprüfen, eine Identifikation der Person anhand der ermittelten charakteristischen Merkmale des Fingerabdruckes ist jedoch nicht möglich.

Dadurch, daß auf dem Datenträger nur die Art des Phantomsignalbildes und der Korrelationsgrad zwischen dem Phantomsignalbild und dem Fingerabdruck der berechtigten Person gespeichert ist, ist eine eindeutige Zuordnung der Daten zu den Personen nicht möglich. Die Erfindung erlaubt es aber trotzdem mit sehr hoher Sicherheit die Berechtigung von Personen zu überprüfen ohne daß das System eine mißbräuchliche Benutzung zur Umgehung des Personendatenschutzes zuläßt.

Eine Ausführungsform der Erfindung ist in den Zeichnungen dargestellt und wird im folgenden beispielsweise näher beschrieben. Es zeigen

Figur 1 ein Fingerabdruck-Erfassungsterminal

Figur 2 eine schematische Darstellung des Aufbaues eines in dem Terminal verwendeten Fingerabdrucksensors

Figur 3 eine schematische Funktionsdarstellung des erfindungsgemäßen Systems und

Figuren 4 und 5 Blockschaltbilder des erfindungsgemäßen Systems.

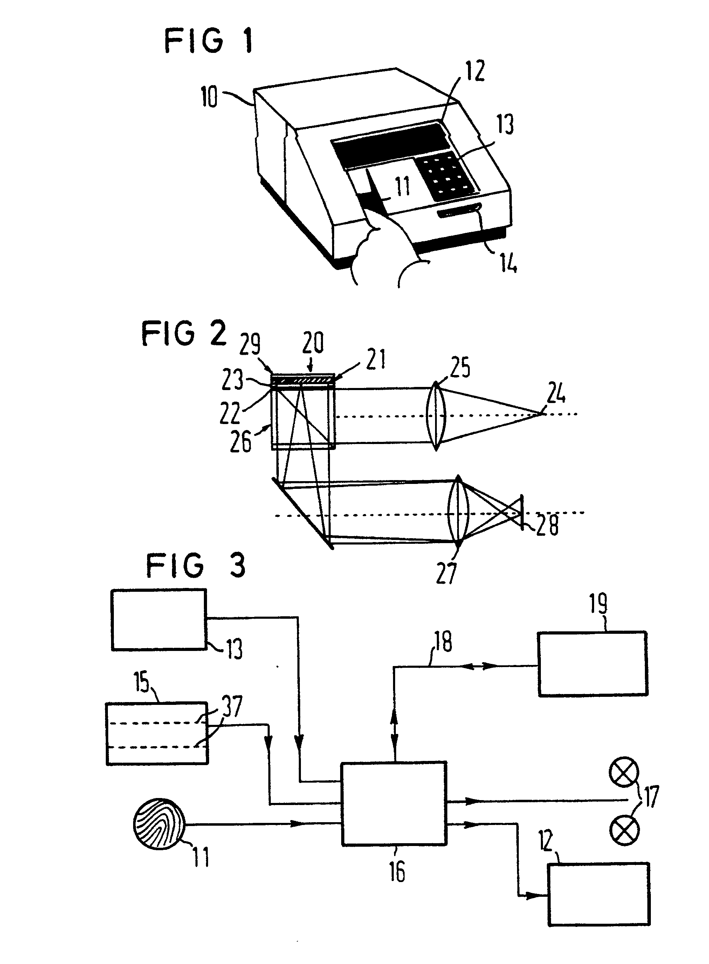

Das Fingerabdruckverifiziersystem enthält ein Terminal 10, das z. B. entsprechend der Figur 1 ausgestaltet sein kann und das unabhängig von einem Zentralrechner arbeitet. Es weist einen eigentlichen Sensorbereich 11 zur Erfassung des Fingerabdruckes auf, weiters ein Anzeigedisplay 12 und eine Eingabetastatur 13. Unterhalb der Eingabetastatur ist eine Kartenleseeinrichtung 14 angeordnet. In dem Gehäuse des Terminals befindet sich die ganze Auswertelogik und die zugehörige Stromversorgung. Ein derartiges Terminal dient als unabhängige Einrichtung zur Ermittelung der Berechtigung von Personen durch Prüfung ihrer Fingerabdrücke.

Anwendung findet es z.B. als Zuganskontrolleinrichtung für Sicherheitsbereiche, als Einrichtung zur fälschungssicheren Überprüfung und Kontrolle von finanziellen Transaktionen z.B. in Verbindung mit Geldautomaten von Kreditinstituten. Auch eine Anwendung im Zusammenhang mit Einkaufskreditkarten und Datenkassen im Einzelhandel ist denkbar.

Ein derartiges Fingerabdruckverifiziersystem läßt sich auf verschiedene Arten realisieren. Bei einer ersten Ausführungsform dem sog. "Charakteristikzahlverfahren" werden auf einer Plastikkarte 15 oder jedem anderen tragbaren Datenträger charakteristische Merkmale des Fingerabdruckes der berechtigten Person (Karteninhaber) gespeichert. Diese Speicherung erfolgt dadurch, daß man dem Karteninhaber mit Hilfe eines Sensors wie er z.B. in der Fig. 2 dargestellt ist den Fingerabdruck eines bestimmten Fingers z.B. des Zeigefingers erfaßt und ihn in bekannter Weise nach charackteristischen Merkmalen untersucht.

Nach Ermittelung einer Menge und Folge von charakteristischen Merkmalen wird diese Datenmenge auf einige wesentliche Merkmale reduziert. Das kann z.B. dadurch geschehen, daß man die Merkmale dahingehend untersucht, wieviele und welche eindeutigen Wirbel, Bögen, Kreisbogen, Doppelwirbel, Überkreuzungen oder andere Papillarlinienformen der Fingerabdruck aufweist.

Diese so erfaßten charakteristischen Merkmale werden in Form einer mehrseitigen Zahl codiert.

Dabei kann z.B. jeder Stelle der Zahl ein bestimmtes Merkmal zugeordnet sein, die Ziffer selbst kann dann bedeuten wie oft dieses Merkmal vorhanden ist. Auch jede andere Art der Codierung ist möglich. Wesentlich dabei ist nur, daß die so gewonnene "Charakteristikzahl" den Fingerabdruck des Karteninhabers in hinreichender Weise beschreibt.

Diese "Charakteristikzahl" wird dann auf der Plastikkarte 15 eingespeichert. Dies kann in Form von Binärzahlen in einer Magnetspur der Plastikkarte geschehen oder aber auch in Form eines aufgedruckten Balkencodes.

Zur Berechtigungsprüfung (Verifizierung) steckt der Karteninhaber seine mit der Charakteristikzahl versehene Plastikkarte in die im Terminal angeordnete Kartenleseeinrichtung 14. Gleichzeitig legt er seinen Finger auf die Sensorfläche des Fingerabdrucksensors 11.

Die Erkennungslogik 16 des Terminals analysiert nun in ähnlicher Weise wie beim ursprünglichen Beschreiben der Karten den Fingerabdruck und gewinnt so eine Folge und Menge von charakteristischen Merkmalen. Über diese Datenfolge wird nun ebenso eine "Charakteristikzahl" ermittelt. In einem Vergleichsvorgang wird die so ermittelte "Charakteristikzahl" mit der Charakteristikzahl auf der Plastikkarte verglichen. Die Vergleichseinrichtung ermittelt nun die Ähnlichkeit zwischen diesen beiden Zahlen und abhängig von einem gewünschten Korrelationsgrad wird ein Entscheidungssignal ausgelöst. Dies kann darin bestehen, daß auf dem Display 12 des Terminals das Wort "Error" bzw. "Accepted" erscheint. Anstelle des Displays ist es auch möglich, eine rote oder grüne Anzeigelampe 17 zu betätigen.

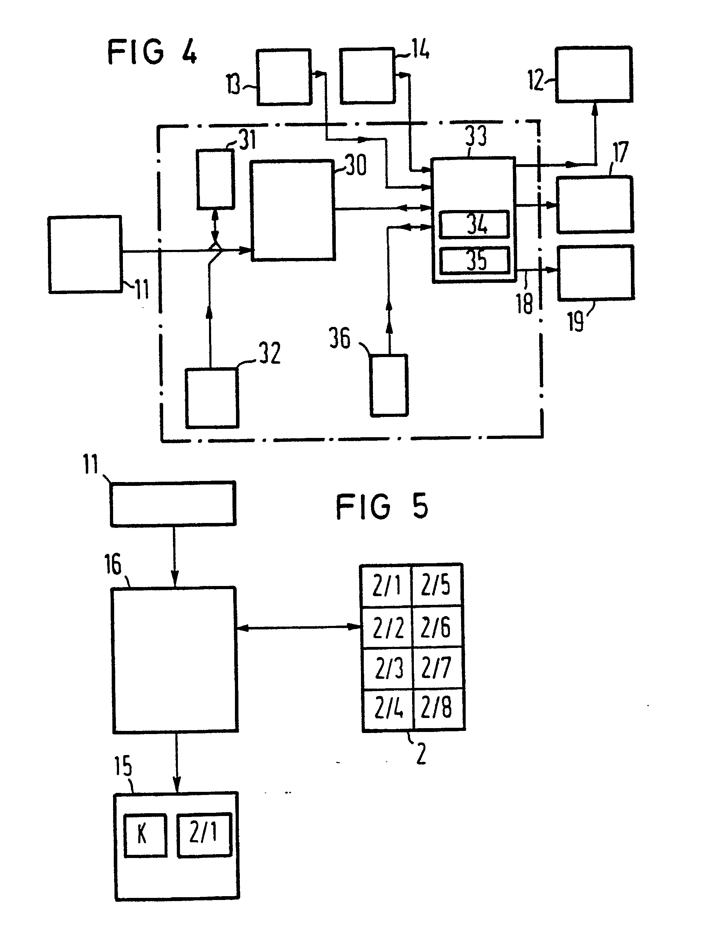

Eine weitere Ausführungsform des Fingerabdruckverifizierungssystems, als "Referenzsignalbildverfahren" bezeichnet, wird im folgenden anhand der Figur 5 beschrieben.

Mit Hilfe des bereits beschriebenen Fingerabdrucksensors 11 wird beim eigentlichen Erfassungsvorgang der Fingerabdruck einer berechtigten Person erfaßt und mit Hilfe der Erkennungslogik 16 analysiert. Die Erkennungslogik 16 vergleicht dabei das Signalbild des Fingerabdruckes der berechtigten Person mit einer vorgegebenen Anzahl von z.B. 8 Referenz- oder Phantomsignalbildern 2/1 - 2/8 die in einem Datenspeicher 2 abgespeichert sind. Diese Referenzsignalbilder 2/1 - 2/8 repräsentieren Signalbilder von charakteristischen Fingerabdrücken, die unterschiedliche Hauptcharakteristiken aufweisen. Das bedeutet jedes Signalbild enthält im Prinzip eine Hauptcharakteristik aus der Menge der am häufigsten vorkommenden Charakteristiken der Fingerabdrücke. Diese Referenzsignalbilder brauchen dabei nicht wirklichen Fingerabdrücken entsprechen, sie müssen nur so ausgestaltet sein, daß ein zeichenerkennungsmäßiger Vergleich der Signalbilder der zu erfassenden Person mit diesen "Phantomsignalbildern" möglich ist. Das bedeutet im Prinzip kann jede Art von "Norm" Signalbildern beim Vergleichsvorgang unabhängig von deren wirklicher Bedeutung verwendet werden.

Die Erkennungslogik vergleicht nun das ermittelte Signalbild der berechtigten und zu erfassenden Person mit den einzelnen Referenzsignalbildern 2/1 - 2/8 und bestimmt so das "ähnlichste" Referenzsignalbild z.B. das Bild 2/1. Gleichzeitig ermittelt sie den Korrelationsgrad K zwischen diesem Referenzsignalbild 2/1 und dem Signalbild des Fingerabdruckes der berechtigten Person. Die Nummer oder sonstige Kennzeichnung des ausgewählten Referenzsignalbildes 2/1 und der Korrelationsgrad K werden auf der Plastikkarte 15 gespeichert.

In dem Terminal entsprechend den Fig. 1 und 2 sind nun in einem Speicher 2, der als ROM-Speicher (Fig. 5) ausgebildet sein kann die beschriebenen Referenz- oder Phantomsignalbilder 2/1 - 2/8 gespeichert. Nach Einschieben der Plastikkarte in die Kartenleseeinrichtung 14 werden die auf der Karte 15 gespeicherten Daten gelesen und so das auf der Karte gekennzeichnete oder markierte Referenzsignalbild 2/1 aufgrund der Markierung aus dem Speicher 2 des Terminals ausgewählt. Das aktuelle Signalbild des Fingerabdruckes der zu überprüfenden Person wird nun mit dem Referenzsignalbild 2/1 verglichen und daraus ein Vergleichskorrelationsfaktor VK, der die Ähnlichkeit zwischen dem aktuellen Fingerabdruck und dem Phantomsignalbild beschreibt, ermittelt. Dieser Vergleichskorrelationsfaktor VK wird nun wiederum mit dem auf der Karte 15 gespeicherten Korrelationsfaktor K verglichen. Bei einer ausreichenden Übereinstimmung wird ein Entscheidungssignal ausgelöst.

Die wesentliche Grundidee des Verifizierungssystems besteht darin, daß keine eigentliche Identifizierung der zu überprüfenden Person stattfindet. Es findet nur ein Vergleich einer beschränkten, den Fingerabdruck charakterisierenden Datenmenge der überprüften Person mit der auf der Karte verzeichneten Datenmenge statt. Die Datenmenge ist mit Bedacht so ausgewählt, daß eine eindeutige Personenzuordnung allein aufgrund der gespeicherten Daten auf der Karte - seien es nun eine "Charakteristikzahl" oder bei dem Referenzsignalbildverfahren die Art des Referenzsignalbildes und der Korrelationsgrad K - nicht möglich ist. Mehrere Personen können eine derartige merkmalreduzierte Charakteristikzahl bzw. Referenzsignalbild aufweisen. Erst die Kombination Karte mit Fingerabdruck ergibt eine extrem hohe Zuordnungssicherheit. Damit ist ein hoher personenbezogener Datenschutz möglich und gewährleistet.

Bei einer Ausführungsform der Erfindung kann die Sicherheit noch dadurch erhöht werden, daß man der einzelnen Person eine persönliche Identifizierungsnummer PIN zuordnet. In diesem Falle gibt die um Berechtigung ersuchende Person nach Eingabe der Karte in die Kartenleseeinrichtung des Fingerabdruck-Erfassungsterminals über eine dort angeordnete Tastatur die persönliche Identifizierungsnummer PIN ein. Über diese persönliche Identifizierungsnummer kann z.B. der Berechtigungsumfang zugeordnet werden.

Zwar ist das Fingerabdruck-Verifiziersystem als ein unabhängig von einem Zentralrechner arbeitendes System in einnem geschlossenen Terminal ausgelegt, es läßt sich doch bei Bedarf auch über eine Datenleitung 18 mit einem Zentralrechner 19 verbinden (Fig. 3). Dies kann z.B. notwendig sein wenn das Terminal mit Geldautomaten von Banken oder ähnlichem zusammenwirkt. Auch bei dem Einsatz des Terminals als Zugangskontrolle kann es notwendig sein, daß Terminal über eine Datenfernleitung mit einer Zentrale zu verbinden die z.B. optisch den Zugangsbereich überwacht.

Das Fingerabdruck-Erfassungsterminal wird dabei im folgenden anhand des "Charakteristikzahlverfahrens" näher beschrieben.

Der gesamte Aufbau entsprechend der Fig. 4 kann in ähnlicher Form auch für das "Referenzsignalbildverfahren" (Fig. 5) verwendet werden. Die gesamte Elektronik des Terminals mit den entsprechenden Zusatzeinrichtungen befindet sich in einem stoßsicheren Gehäuse das z.B. schräge Außenflächen aufweist, damit z.B. Getränkebecher oder ähnliches nicht darauf abgestellt werden können. Auch die Zugänge zu den einzelnen Abtast- und Erfassungseinrichtungen müssen verschließbar ausgestaltet sein, so daß eine mutwillige Zerstörung des Systems nicht möglich ist.

Als Fingerabdrucksensor wird dabei ein Sensor verwendet, wie er in der Fig. 2 beschrieben ist. Der dargestellte, nach dem Lichtbrechungsprinzip arbeitende Sensor wie er dem Prinzip nach der US-PS 44 28 670 entnehmbar ist, weist als Sensorfläche 20 eine elastische Silikon-Elastomerschicht 21 auf, die als Auflagefläche für den abzutastenden Finger dient und die sich aufgrund ihres elastischen Verhaltens an die Papillarlinien des Fingerabdruckes anpaßt. Gestützt wird die Elastomerschicht von einer durchsichtigen ebenen Stützplatte 22, wobei der Zwischenraum zwischen Elastomerschicht und Stützplatte durch ein optisches Anpassungsmedium 23 z.B. Öl ausgefüllt sein kann. Das von einer Lichtquelle 24 ausgehende Licht beleuchtet über Linsen 25 und einen Strahlenteiler 26 von unten her die Elastomerschicht und wird entsprechend dem Verlauf der Papillarlinien an der Sensorfläche (Oberfläche) der Elastomerschicht gebrochen. Das reflektierende Abbild der Sensorfläche wird wiederum über ein optisches Abbildungssystem 27 auf einen CCD-Bildwandler 28 abgebildet und dort in elektrische Bildsignale umgesetzt. Der Sensor kann z.B. aus einer Matrix mit 256 x 256 Punkten mit 16 Graustufen bestehen.

Um den Einfluß von Fremdlicht auszuschalten und gleichzeitig die Elastomerschicht 21 vor Verschleiß zu schützen, kann die Oberfläche der Elastomerschicht auf die der abzutastenden Finger gelegt wird, mit einer dünnen Metallschicht 29 beschichtet sein. Dies ist auch für die Abtastsicherheit von Vorteil, macht sie doch die Abtastung unabhängig vom Feuchtigkeitsgehalt der Haut bzw. der Papillare. Üblicherweise entstehen sonst beim Abtasten von Fingerabdrucken von Personen Probleme, deren Haut sehr spröde und trocken ist.

Die von den CCD-Bildwandlern gelieferten Bildsignale werden in einer Auswertelogik 30, die üblicherweise mikroprozessorgesteuert aufgebaut ist und einen Datenspeicher 31 und einen Programmspeicher 32 enthalten, nach Einzelheiten und Merkmalen des Fingerabdruckes analysiert. Zu diesem Zwecke wird der Fingerabdruck in Form seiner elektrischen Signale zunächst als Ganzes zwischengespeichert und dann analysiert. Dabei können mit bekannten Erkennungsverfahren (MY Chiu, "Shore Walk Algorithms And Its Application To Fingerprint Feature Extraction", July 1981, Siemens RTL, Princeton, NJ, USA. MY Chiu, "Results Of The Shore-Walk Algorithm And The Matching Algorithm For A Fingerprint Verification System" October 1981, Siemens RTL, Princeton, NJ, USA.) bei vorgegebener Größe und Auflösung des Bildwandlers ca. 40 Merkmale erfaßt werden, z.B. Lage in kartesischen Koordinaten (x und y), den Winkelverlauf (The ta) und den Qualitätsfaktor Q der Merkmalerkennung. Nach der Erkennungsprozedur werden die Daten dieser 40 Merkmale über einen passenden Rechneralgorithmus auf eine 40 Bit-Datenmenge reduziert. Dieser Algorithmus erfaßt dabei in erster Linie die relativen Positionen in Richtungen und nicht deren absolute Werte.

Die Gewichtung erfolgt in Abhängigkeit von der Erkennungssicherheit und ihrem ermittelten Qualitätsfaktor. Es ist möglich dazu übliche polynome Verfahren mit Pseudozufallsgeneratoren zu verwenden.

Der Reduktionsgrad vom Übergang der den Merkmalen zugeordneten Datenmenge auf die tatsächlich verwertete Datenmenge hängt in erster Linie von der Kapazität der verwendeten Karte mit den darauf gespeicherten Vergleichsdaten bzw. deren Verwendungszweck ab.

Dieser Reduktionsvorgang ist dem Grunde nach irreversibel. Es bedeutet eine Identifizierung der Person ausgehend allein von den reduzierten Daten ist nicht möglich, weil diese Daten gewollt auf mehreren Personen zuordbar sind. Damit wird eine höchstmögliche Datensicherheit gewährleistet.

Um den nachfolgenden Vergleichsvorgang zu erleichtern, kann die auf 40 Bit reduzierte Datenmenge die Form einer mehrstelligen Binärzahl der sogenannten Charakteristikzahl haben, wobei jedem Merkmal z.B. eine Stelle der Binärzahl (Charakteristikzahl) zugeordnet ist. Die Werte der einzelnen Stellen der Zahl können z.B. Die Häufigkeit des Vorkommens des Merkmals bzw. seine Gewichtung bedeuten.

In dem folgenden Vergleichsvorgang wird diese so ermittelte Charakteristikzahl einer Auswertesteuereinrichtung 33 zugeführt, die diese Charakteristikzahl mit einer in die Kartenleseeinrichtung eingesetzten Kreditkarte und der darauf angeordneten Charakteristikzahl vergleicht. Abhängig von einem vorgebbaren Korrelationsgrad zwischen der gespeicherten Charakteristikzahl und der ermittelten Charakteristikzahl wird ein Entscheidungssignal generiert und die Entscheidung dann auf dem Display angezeigt bzw. durch Aufleuchten einer Signallampe. Die zentrale Auswertesteuereinrichtung 33 enthält unter anderem wiederum einen Programmspeicher 34 und einen Datenspeicher 35 und steuert die peripheren Eingabeeinrichtungen. Diese sind z.B. die Kartenleseeinrichtung 14, eine Eingabetastatur 13 zur Eingabe der persönlichen Identifizierungszahl (PIN) und das Display 12. Die Steuerung des Displays kann dabei so sein, daß über das Display eine Bedienerführung erfolgt.

Anstelle der Anzeige über das Display kann die Verifizierungsentscheidung z.B. auch über die Anzeigelampe 17 angezeigt werden, die grün oder rot aufleuchtet. Zum Anschluß an einen Geldautomaten oder an eine zentrale Überwachungseinrichtung kann eine Datenleitung angeschlossen sein.

Um wie bereits beschrieben einen Vergleich der Charakteristikzahlen ermöglichen zu können enthält das Terminal eine Kartenleseeinrichtung 14 die zum Einschieben der abzulesenden Karte mit der darauf gespeicherten Charakteristikzahl dient. Diese Charakteristikzahl kann auf der Karte in Form einer Binärzahl auf einem Magnetstreifen oder auch als Balkencode angeordnet sein.

Die so gelesene Charakteristikzahl wird in einem Datenspeicher 36 gespeichert. Ebenfalls gespeichert ist eine Steuer- und Leitprozedur zur Bedienerführung die über die zugehörige Ansteuereinrichtung die entsprechenden Bedienbefehle auf dem Display darstellt.

Je nach Anwendungsfall kann die Charakteristikzahl auf den Karten mehr oder weniger Information über den Fingerabdruck enthalten.

Ist die Karte als Kreditkarte ausgebildet und wird sie in entsprechender Weise verwendet so sollte die Karte drei Magnetspuren aufweisen, wobei eine der Spuren als Datenträger für die Charakteristikzahl dient. Die anderen Spuren müssen wieder beschreibbar sein und die eigentlichen Daten tragen.

Bei der Verwendung der Karte als Zugangsausweis für Hochsicherheitsbereiche können bei der Karte alle drei Spuren als Speicher einer Charakteristikzahl dienen die auch mehr Informationen enthält. Dabei können die Daten verschlüsselt sein und jedes Merkmal kann durch einen Datensatz dargestellt werden, der durch die Position (xy) den Winkel (teta) und die Qualitätszahl (Q) definiert ist. Dabei ist davon auszugehen, daß für jede das Merkmal ca. 6 Bytes notwendig sind.

Für die beschriebenen Zwecke als Zugangskontrolle würde eine Erfassung von 20 Merkmalen ausreichend sein. Dies würde einer Anzahl von 120 Bytes entsprechen. Eine derartige Datenmenge würde die drei Spuren einer Magnetkarte im wesentlichen füllen.

Bezugszeichenliste

| | |
|---|---|
| 10 | Terminal |
| 11 | Sensorbereich |
| 12 | Anzeigedisplay |
| 13 | Eingabetastatur |
| 14 | Karteleseeinrichtung |
| 15 | Plastikkarte-Kreditkarte |
| 16 | Erkennungslogik |
| 17 | Anzeigelampe |
| 18 | Datenleitung |
| 19 | Zentralrechner |
| 20 | Sensorfläche |
| 21 | Silikon-Elastomerschicht |
| 22 | Stützplatte |
| 23 | optisches Anpassungsmedium |
| 24 | Lichtquelle |
| 25 | Linsen |
| 26 | Strahlenteiler |
| 27 | Abbildungssystem (Linse) |
| 28 | CCD-Bildwandler |
| 29 | Metallschicht |
| 30 | Auswertelogik |
| 31 | Datenspeicher |
| 32 | Programmspeicher |
| 33 | Auswertesteueranordnung |
| 34 | Programmspeicher |
| 35 | Datenspeicher (nichtflüchtig) |
| 36 | Datenspeicher |
| 37 | Magnetspuren |
| PIN | persönliche Identifikationsnummer |
| 2 | Datenspeicher |
| 2/1 bis 2/8 | im Datenspeicher gespeicherte Referenzsignalbild |
| K | Korrelationsgrad, Korrelationsfaktor |
| VK | vergleichskorrelationsgrad, Vergleichskorrelationsfaktor |

**Ansprüche**

1. Anordnung zur Ermittlung der Berechtigung von Personen durch Überprüfung ihrer Fingerabdrücke, mit einem tragbaren Datenträger (15) mit einem ersten Datenbereich (37) zur Aufnahme von Daten (K, 2/1) die eine vorgegebene Menge und Folge von dem Fingerabdruck der berechtigten Person zugeordneten Merkmale repräsentieren, einem Fingerabdruckerfassungs-Terminal (10) mit einem Sensor zur Erfassung des aktuellen Fingerabdruckes einer zu überprüfenden Person und einer Leseeinrichtung (14) für den Datenträger (15) und einer dem Fingerabdruckerfassungs-Terminal (10) zugeordnete Verifizierungsanordnung (16), die nach einer vorgegebenen Routine eine Menge und Folge von dem aktuellen Fingerabdruck zugeordneten Merkmalen ermittelt und diese Menge und Folge von Merkmalen mit der durch die Daten des Datenträgers (15) repräsentierten Menge und Folge von Merkmalen der berechtigten Person vergleicht und in Abhängigkeit von dem Korrelationsgrad der Merkmale ein entsprechendes Entscheidungssignal auslöst, **dadurch gekennzeichnet,** daß in dem Fingerabdruckerfassungsterminal (10) in einem Speicher (2) eine Folge von unabhängig von ihrer wirklichen Bedeutung auswählbaren Phantomsignalbildern (2/1..2/8) die durch ihre Gestaltung einen zeichenerkennungsmäßigen Vergleich mit dem Signalbild des Fingerabdruckes der berechtigten Person ermöglichen, gespeichert ist und auf dem Datenträger (l5) die Art des Phantomsignalbildes (2/1) und der Korrelationsgrad (K) zwischen dem Signalbild des Fingerabdruckes der berechtigten Person und diesem Phantomsignalbild (2/1), wobei die Verifizierungsanordnung (16) beim Verifizierungsvorgang zunächst entsprechend den Daten des Datenträgers das entsprechende Phantomsignalbild (2/1) aufruft und den Vergleichskorrelationsgrad (VK) zwischen der zu überprüfenden Person und dem aufgerufenen Phantomsignalbild (2/1) ermittelt und in Abhängigkeit von einem Vergleich des auf dem Datenträger gespeicherten Korrelationsgrades (K) und dem ermittelten aktuellen Vergleichskorrelationsgrad (VK) ein entsprechendes Entscheidungssignal auslöst.

2. Anordnung nach Anspruch 1, **dadurch gekennzeichnet,** daß der Datenträger (15) einen weiteren Bereich zur Aufnahme einer persönlichen Identifikationsnummer (PIN) aufweist.

3. Anordnung nach einem der Ansprüche 1 oder 2, **dadurch gekennzeichnet,** daß die Bereiche zur Aufnahme von Daten als wiederbeschreibbare Speichermedien (37) ausgebildet sind.

4. Anordnung nach einem der Ansprüche 1 bis 3, **dadurch gekennzeichnet,** daß die Daten auf dem Datenträger (15) in Form von einem mehrstelligen Zahlwort gespeichert werden.

5. Anordnung nach Anspruch 4, **dadurch gekennzeichnet,** daß die Daten in Bar-Code-Form gespeichert sind.

6. Anordnung nach einem der Ansprüche 1 bis 5, **dadurch gekennzeichnet,** daß es sich bei dem Datenträger (15) um eine Karte (15) mit mindestens einem darauf angeordneten Magnetstreifen (37) handelt.

7. Anordnung nach einem der Ansprüche 1 bis 6, **dadurch gekennzeichnet,** daß das Fingerabdruckerfassungs-Terminal eine alphanumerische Anzeigeeinrichtung (12) zur Bedienerführung aufweist.

8. Anordnung nach einem der Ansprüche 1 bis 7, **dadurch gekennzeichnet,** daß dem Fingerabdruckerfassungs-Terminal eine Eingabetastatur (13) zugeordnet ist.

9. Anordnung nach einem der Ansprüche 1 bis 9, **dadurch gekennzeichnet,** daß der Sensor eine Fingerabdruckwandlereinrichtung enthält, die als Auflagefläche (20) für einen zu prüfenden Finger eine Elastormerschicht (21) aufweist, die auf ihrer Tastfläche mit einer Metallschicht (29) überzogen ist, wobei die Elastomerschicht von unten her beleuchtet wird und eine optische Übertragungseinrichtung das von dem Fingerabdruck hervorgerufene Deformationsbild der Elastomerschicht (21) einem Bildwandler (28) zuführt.

10. Anordnung nach Anspruch 1 bis 9, **dadurch**

**gekennzeichnet,** daß der dem Sensor (11) zugeordnete Bildwandler (18) als Wandlerelement ein CCD-Element aufweist.

11. Verfahren zum Ermitteln der charakteristischen Merkmale des Fingerabdruckes für ein Fingerabdruck-Verifiziersystem gemäß Anspruch 1, **gekennzeichnet** durch folgende Verfahrensschritte:
    a) mit Hilfe einer Fingerabdruckerfassungseinrichtung (11) wird der Fingerabdruck erfaßt und in ein Signalbild umgesetzt,
    b) nach der Generierung des Signalbildes aus dem Fingerabdruck der berechtigten Person wird das Signalbild des Fingerabdruckes mit einer vorbestimmbaren Anzahl von gespeicherten Phantomsignalbildern (2/1 bis 2/8) verglichen und damit der Korrelationsgrad (K) zwischen den Phantomsignalbildern (2/1 bis 2/8) und dem Fingerabdruck ermittelt,
    c) die Art eines Phantomsignalbildes (2/1) und der zugehörige Korrelationsgrad mit dem Fingerabdruck (K) wird beim Erfassungsvorgang auf dem Datenträger (15) gespeichert.

12. Verfahren nach Anspruch 11, **dadurch gekennzeichnet,**
    d) daß beim Verifizierungsvorgang in Abhängigkeit von den auf dem Datenträger (15) gespeicherten Daten das entsprechende Phantomsignalbild aufgerufen und ein Vergleichskorrelationsgrad (VK) zwischen dem aufgerufenen Phantomsignalbild und dem Fingerabdruck der zu überprüfenden Person ermittelt wird und
    e) daß dann in Abhängigkeit von einem Vergleich des auf dem Datenträger (15) gespeicherten Korrelationsgrades (K) und des ermittelten Vergleichskorrelationsgrades (VK) ein Entscheidundssignal ausgelöst wird.

## Claims

1. Arrangement for determining the authenticity of persons by verifying their fingerprints, with a portable data carrier (15) having a first data region (37) for receiving data (K, 2/1) representing a predetermined quantity and sequence of features assigned to the fingerprint of the authorized person, with a fingerprint detection terminal (10) having a sensor for detecting the current fingerprint of a person to be verified and a reader (14) for the data carrier (15) and a verification arrangement (16) which is assigned to the fingerprint detection terminal (10) and which, according to a predetermined routine, determines a quantity and sequence of features assigned to the current fingerprint, compares this quantity and sequence of features with the quantity and sequence of features of the authorized person represented by the data of the data carrier (15) and triggers an appropriate decision signal as a function of the degree of correlation of the features, characterised in that the fingerprint detection terminal (10) stores in a memory (2) a sequence of phantom signal images (2/1 to 2/8) which are selectable independently of their actual significance and which by their formation allow a character recognition comparison with the signal image of the fingerprint of the authorized person, and the data carrier (15) stores the type of phantom signal image (2/1) and the degree of correlation (K) between the signal image of the fingerprint of the authorized person and this phantom signal image (2/1), the verification arrangement (16) during the verification operation first calling up the appropriate phantom signal image (2/1) according to the data of the data carrier, determining the comparative degree of correlation (VK) between the person to be verified and the phantom signal image (2/1) called up and triggering an appropriate decision signal as a function of a comparison between the degree of correlation (K) stored on the data carrier and the current comparative degree of correlation (VK) determined.

2. Arrangement according to Claim 1, characterised in that the data carrier (15) has a further region for receiving a personal identification number (PIN).

3. Arrangement according to one of Claims 1 or 2, characterised in that the regions for receiving data are designed as alterable storage media (37).

4. Arrangement according to one of Claims 1 to 3, characterised in that the data are stored on the data carrier (15) in the form of a multi-digit number word.

5. Arrangement according to Claim 4, characterised in that the data are stored in bar-code form.

6. Arrangement according to one of Claims 1 to 5, characterised in that the data carrier (15) is a card (15) with at least one magnetic strip (37) arranged on it.

7. Arrangement according to one of Claims 1 to 6, characterised in that the fingerprint detection terminal has an alphanumeric display device (12) for operator control.

8. Arrangement according to one of Claims 1 to 7, characterised in that the fingerprint detection terminal is assigned an input keyboard (13).

9. Arrangement according to one of Claims 1 to 8, characterised in that the sensor contains a fingerprint converter device which possesses, as a bearing surface (20) for a finger to be checked, an elastomeric layer (21) covered on its touch surface with a metal layer (29), the elastomeric layer being illuminated from below, and an optical transmission device sending the deformation image of the elastomeric layer (21) produced by the fingerprint to an image converter (28).

10. Arrangement according to Claims 1 to 9, characterised in that the image converter (18) assigned to the sensor (11) has a CCD element as a converter element.

11. Process for determining the characteristic features of the fingerprint for a fingerprint verification system according to Claim 1, characterised by the following process steps:
    a) by means of a fingerprint detection device (11) the fingerprint is detected and converted into a signal image,
    b) after the generation of the signal image from the fingerprint of the authorized person, the signal image of the fingerprint is compared with a predeterminable number of stored phantom signal images (2/1 to 2/8) and the degree of correlation (K) between the phantom signal images (2/1 to 2/8) and the fingerprint is thereby determined,
    c) the type of a phantom signal image (2/1) and the associated degree of correlation with the fingerprint (K) is stored on the data carrier (15) during the detection operation.

12. Process according to Claim 11, characterised
    d) in that, during the verification operation, the appropriate phantom signal image is called up as a function of the data stored on the data carrier (15) and a comparative degree of correlation (VK) between the phantom signal image called up and the fingerprint of the person to be verified is determined, and
    e) in that then a decision signal is triggered as a function of a comparison between the degree of correlation (K) stored on the data carrier (15) and the comparative degree of correlation (VK) determined.

## Revendications

1. Dispositif pour établir l'habilitation de personnes au moyen du contrôle de leurs empreintes digitales, comportant un support de données portable (15) possédant une première zone de données (31) servant à recevoir des données (K, 2/1), qui représentent une quantité et une suite prédéterminées de caractéristiques associées à l'empreinte digitale de la personne habilitée,
un terminal (10) d'intégration d'empreintes digitales, comportant un capteur servant à détecter l'empreinte digitale réelle d'une personne à contrôler, et un dispositif de lecture (14) pour le support de données (15) et un dispositif de vérification (16), qui est associé au terminal (10) d'enregistrement des empreintes digitales, détermine, en fonction d'un sous-programme prédéterminé, une quantité et une suite de caractéristiques associées à l'empreinte digitale réelle, compare cette quantité et cette suite de caractéristiques à la quantité et à la suite de caractéristiques de la personne habilitée, qui représentent les données du support de données (15), et déclenche, en fonction du degré de corrélation des caractéristiques, un signal de décision correspondant, caractérisé par le fait que dans une mémoire (2) du terminal (10) de détection des empreintes digitales est mémorisée une suite d'images de signaux fantômes (2/1...2/8), qui peuvent être sélectionnés indépendamment de leur signification réelle et permettent, de par leur configuration, une comparaison, qui permet une identification de dessins, à l'image de signal de l'empreinte digitale de la personne habilitée, et que le type de l'image de signal fantôme (2/1) et le degré de corrélation (K) entre l'image de signal de l'empreinte digitale de la personne habilitée et cette image de signal fantôme (2/1), sont mémorisés dans le support de données (15), auquel cas, lors de l'opération de vérification, le dispositif de vérification (16) appelle tout d'abord l'image correspondante de signal fantôme (2/1), en fonction des données du support de données, détermine le degré de corrélation comparatif (VK) entre la personne à contrôler et l'image de signal fantôme (2/1) appelée et déclenche un signal de décision correspondant en fonction d'une comparaison entre le degré de corrélation (K) mémorisé dans le support de données et le degré réel déterminé de corrélation comparatif (VK).

2. Dispositif suivant la revendication 1, caractérisé par le fait que le support de données (15) possède une autre zone pour l'enregistrement d'un numéro personnel d'identification (PIN).

3. Dispositif suivant l'une des revendications 1 ou 2, caractérisé par le fait que les zones de détection des données sont réalisées sous la forme de milieux de mémoire (37) pouvant être réenregistrés.

4. Dispositif suivant l'une des revendications 1 à, 3, caractérisé par le fait que les données situées dans le support de données (15) sont mémorisées sous la forme d'un mot formé de plusieurs chiffres.

5. Dispositif suivant la revendication 4, caractérisé par le fait que les données sont mémorisées sous la forme d'un code à barres.

6. Dispositif suivant l'une des revendications 1 à 5, caractérisé par le fait qu'en ce qui concerne le support de données (15), il s'agit d'une carte (15), sur laquelle est disposée au moins une bande magnétique (37).

7. Dispositif suivant l'une des revendications 1 à 6, caractérisé par le fait que le terminal de détection d'empreintes digitales possède un dispositif d'affichage alphanumérique (12) destiné à guider l'utilisateur.

8. Dispositif suivant l'une des revendications 1 à 7, caractérisé par le fait qu'un clavier d'entrée (13) est associé au terminal de détection des empreintes digitales.

9. Dispositif suivant l'une des revendications 1 à 8, caractérisé par le fait que le capteur contient un dispositif de conversion d'empreintes digitales, qui possède, en tant que surface d'appui (20) pour un doigt devant être contrôlé, une couche d'élastomère (21), qui est recouverte, sur sa surface de détection, par une couche métallique (29), la couche d'élastomère étant éclairée à partir du bas et un dispositif de transmission optique envoyant à un convertisseur d'images (28) l'image de la déformation de la couche d'élastomère (21), produite par l'empreinte digitale.

10. Dispositif suivant les revendications 1 à 9, caractérisé par le fait que le convertisseur d'images (18) associé au capteur (11) comporte, en tant qu'élément convertisseur, un élément CCD.

11. Procédé pour déterminer les éléments caractéristiques de l'empreinte digitale pour un système de vérification d'empreintes digitales suivant la revendication 1, caractérisé par les étapes opératoires suivantes :

a) un dispositif (11) de détection d'empreintes digitales enregistre l'empreinte digitale et la convertit en une image de signal,

b) après la production de l'image de signal à partir de l'empreinte digitale de la personne habilitée, cette image de signal est comparée à un nombre, pouvant être prédéterminé, d'images de signaux fantômes (2/1 à 2/8) mémorisées et, de ce fait, le degré de corrélation (K) entre les images de signaux fantômes (2/1 à 2/8) et l'empreinte digitale est déterminé,

c) le type d'une image de signal fantôme (2/1) et le degré associé de corrélation avec l'empreinte digitale (K) sont mémorisés dans le support de données (15), lors de l'opération de détection.

12. Procédé suivant la revendication 11, caractérisé par le fait

d) que, lors de l'opération de vérification, l'image de signal fantôme correspondante est appelée, en fonction des données mémorisées sur le support de données (15) et un degré de corrélation comparatif (VK) est établi entre l'image de signal fantôme appelée et l'empreinte digitale de la personne à contrôler, et

e) qu'ensuite, un signal de décision est déclenché en fonction d'une comparaison du degré de corrélation (K) mémorisé dans le support de données (15) et du degré de corrélation comparatif (VK) déterminé.

# FIG 1

# FIG 2

# FIG 3

FIG 4

FIG 5